# FASCICULE DE BREVET EUROPEEN

(11) **EP 2 555 881 B1**
(45) Date de publication et mention de la délivrance du brevet: **21.02.2018**
(21) Numéro de dépôt: 11719345.8
(22) Date de dépôt: 08.04.2011
(51) Int. Cl.: B08B 3/02, B08B 3/14, B05B 7/06, B05B 7/08

(54) **INSTALLATION AVEC JET DE TRAITEMENT POUR LE NETTOYAGE ET/OU LE DEGRAISSAGE DE PIECES MANUFACTUREES**
ANLAGE MIT BEHANDLUNGSSTRAHL ZUR REINIGUNG UND/ODER ENTFETTUNG VON WERKSTÜCKEN
ARRANGEMENT WITH TREATING JET FOR CLEANING AND/OR DEGREASING WOKRPIECES

(30) Priorité: 09.04.2010 FR 1001485
(43) Date de publication de la demande: 13.02.2013
(73) Titulaire: Dürr Ecoclean GmbH, 70794 Filderstadt (DE)
(72) Inventeur: GESLOT, Marcel, F-72540 Saint-Christophe en Champagne (FR)
(74) Mandataire: Gauss, Nikolai
(86) Numéro de dépôt international: PCT/FR2011/050810
(87) Numéro de publication internationale: WO 2011/124868

(56) Documents cités:
- WO-A2-02/09894
- DE-A1- 4 334 905

## Description

La présente invention concerne le domaine du traitement de surface de pièces manufacturées. Elle concerne en particulier les installations permettant le nettoyage et/ou le dégraissage de pièces manufacturées, par la mise en oeuvre d'un jet de traitement.

Les procédés industriels pour la fabrication de pièces manufacturées peuvent comporter des opérations de nettoyage et/ou de dégraissage, utiles en particulier préalablement à certaines étapes de traitement (peinture par exemple) et/ou d'assemblage.

Par exemple, on peut avoir besoin de nettoyer les pièces usinées pour éliminer les copeaux et/ou les poussières générées lors de l'usinage.
Il est parfois nécessaire de mettre en oeuvre des opérations de dégraissage pour éliminer les huiles présentes sur les pièces d'intérêt, susceptibles de provenir notamment des machines-outils employées lors de leur fabrication.

Les techniques actuelles de nettoyage/dégraissage consistent pour la plupart à appliquer un jet de liquide avec solution lessiviel, ou un jet de vapeur sur les pièces à traiter.

Par exemple, le document WO-02/09894 décrit une tête d'application pour la projection d'un jet de traitement selon le préambule de la revendication 1 dans lequel les pièces à nettoyer sont soumises à un jet de traitement consistant en un mélange de gaz propulsif et de vapeur.
A cet effet, ce système de nettoyage comporte une tête d'application comprenant un corps tubulaire pour la conduction du gaz propulsif, dans lequel est logé un tube intérieur pour la conduction de la vapeur.
En fonctionnement, la vapeur est délivrée au sein du corps tubulaire de sorte à assurer le mélange des deux fluides avant leur projection sur la pièce à traiter au travers d'un orifice unique de sortie.

De manière alternative ou complémentaire, ces pièces peuvent également être immergées dans une cuve remplie d'un liquide de traitement.
Les pièces ainsi nettoyées/dégraissées doivent ensuite faire l'objet d'une opération de séchage, pour éliminer les liquides résiduels de surface.

Cependant, ces installations de nettoyage/dégraissage n'assurent pas un traitement optimal des pièces ; de plus, elles ne sont pas optimales sur le plan du rendement énergétique, et elles consomment souvent des quantités relativement importantes de fluide de traitement, en particulier dans le cas du traitement de pièces présentant de grandes dimensions, par exemple comme celles utilisées pour la fabrication de structures éoliennes (roulements, couronnes d'orientation et les pièces constitutives des boîtes de vitesse, etc.).

Il convient de noter ici qu'une consommation élevée en fluide de traitement vient encore réduire le rendement énergétique des installations, du fait de l'énergie nécessaire, d'une part pour sécher les pièces après traitement, et d'autre part pour recycler les fluides de traitement récupérés.

Dans ce contexte, la demanderesse a développé une nouvelle tête d'application selon la revendication 1. Dans la présente tête d'application, les fluides utilisés ne sont pas mélangés avant d'être libérés dans le milieu atmosphérique.

Le jet central de vapeur d'eau est protégé par le jet périphérique d'air.

Sans être lié par aucune théorie, le jet périphérique d'air évite la dilution de l'énergie du jet central de vapeur dans l'atmosphère, liée aux pertes de charges consécutives à la vitesse de pénétration d'un fluide dans l'atmosphère.
Ce système avec jet d'air périphérique a donc un double effet : (i) la protection de la vapeur d'eau, avec préservation de son énergie utile aux opérations de nettoyage (en particulier dégraissage) et (ii) l'apport d'une énergie moteur ayant un effet mécanique d'impact fort.

Une telle tête d'application assure un traitement de surface, notamment un nettoyage et un dégraissage, particulièrement efficace des pièces traitées.

Ces jets vapeur/air donnent leur pleine efficacité lors de l'impact sur la pièce, du fait de leurs propriétés intrinsèques respectives ; ensuite, ces deux jets se diluent au point d'éclatement, de sorte à constituer un mélange final d'eau et d'air dont la pression partielle de vapeur est de préférence inférieure à la pression de vapeur saturante.

De plus, en pratique, la pièce manufacturée s'avère peu mouillée en fin de traitement, et la quantité d'énergie nécessaire à son séchage final est ainsi significativement réduite, voire supprimée.

En outre, l'optimisation de l'action de la vapeur permet de réduire le volume d'eau consommé lors du traitement, et en corollaire permet une diminution de l'énergie nécessaire non seulement à la production de vapeur mais aussi à son recyclage.

Selon un mode de réalisation, les extrémités amont des conduits de distribution se rejoignent au niveau d'une chambre formant collecteur raccordée aux moyens de production de vapeur.

Selon un autre mode de réalisation, le distributeur délimite un conduit de distribution unique dont l'extrémité aval forme une buse de sortie, lequel distributeur comporte un moyen complémentaire pour régler la section de ladite buse de sortie.

Les moyens de production des fluides coopèrent avantageusement avec des moyens pour la récupération d'eau et/ou d'énergie thermique contenues dans l'espace de traitement.

La présente invention porte également sur une installation comprenant ladite tête d'application pour le nettoyage et/ou le dégraissage de pièces manufacturées selon la revendiaction 4. L'invention concerne également un procédé pour le nettoyage et/ou le dégraissage de pièces manufacturées au sein d'une installation telle que définie ci-dessus, selon la revendication 6. D'autres caractéristiques avantageuses, pouvant être prises en combinaison ou indépendamment les unes des autres, sont développées ci-dessous :
- le jet d'air consiste en une lame continue de fluide entourant le jet de vapeur d'eau ;
- le contour intérieur du jet d'air et le contour extérieur du jet de vapeur présentent chacun une forme choisie parmi (i) une forme générale allongée, par exemple rectangulaire ou oblongue, ou (ii) une forme générale circulaire ;
- le jet de vapeur est constitué d'une vapeur saturée, et le jet d'air est constitué d'air sec ;
- le jet de vapeur comporte, au niveau des moyens d'application, les caractéristiques suivantes : un débit massique compris entre 60 kg et 200 kg/h, une pression comprise entre 4 et 15 bars, une température comprise entre 150 et 250°C, une vitesse comprise entre 30 et 80 m/s, et un titre inférieur à 1 ; le jet d'air comporte, au niveau des moyens d'application, les caractéristiques suivantes : un débit volumique compris entre 0,2 et 0,8 m³/s, une température comprise entre 30 et 70°C, un taux d'humidité relative compris entre 5 et 30 %, et une vitesse comprise entre 50 et 180 m/s (de préférence entre 50 et 100 m/s) ; de manière générale, la vitesse du jet de vapeur est avantageusement inférieure à la vitesse du jet d'air (ou la vitesse du jet d'air est avantageusement supérieure à la vitesse du jet de vapeur) ;
- le procédé comprend au moins une étape au cours de laquelle le débit volumique en vapeur d'eau et le débit volumique en air constitutifs du jet de traitement sont pilotés de sorte à ajuster la pression partielle de vapeur d'eau de l'espace de traitement de ladite installation ;
- le procédé comprend une étape finale d'arrêt de l'application du jet de vapeur tout en poursuivant l'application du jet d'air, de manière à assécher la pièce traitée et l'espace de traitement de l'installation.

L'invention sera encore illustrée, sans être aucunement limitée, par la description suivante d'un mode de réalisation particulier, cela en relation avec les dessins annexés dans lesquels :
- la figure 1 est une vue schématique d'une installation de nettoyage/dégraissage selon l'invention, représentée sous la forme d'un organigramme avec une vue de détail agrandie des moyens d'application du jet de traitement ;
- la figure 2 est une vue générale et en perspective d'une forme de réalisation possible de la tête d'application, pouvant équiper l'installation selon la figure 1 ;
- la figure 3 montre la tête d'application selon la figure 2, avec ses différentes pièces constitutives représentées de manière éclatée ;
- les figures 4 et 5 sont respectivement des vues de face et de côté de la tête d'application selon les figures 2 et 3 ;
- la figure 6 est une vue en coupe de la tête d'application des figures 2 à 5, selon un plan de coupe VI-VI de la figure 5 ;
- les figures 7 et 8 représentent le distributeur de vapeur équipant la tête d'application selon les figures 2 à 6, respectivement vu de dessus et vu de côté ;
- la figure 9 est une vue générale et en perspective d'une seconde forme de réalisation possible de la tête d'application, pouvant équiper l'installation selon la figure 1 ;
- la figure 10 est une vue en coupe de la tête d'application selon la figure 9 ;
- la figure 11 est une vue de détail de la buse de sortie de la vapeur d'eau, équipant la tête d'application de la figure 9 ;
- la figure 12 est une vue éclatée, et en perspective, de la tête d'application selon la figure 9.

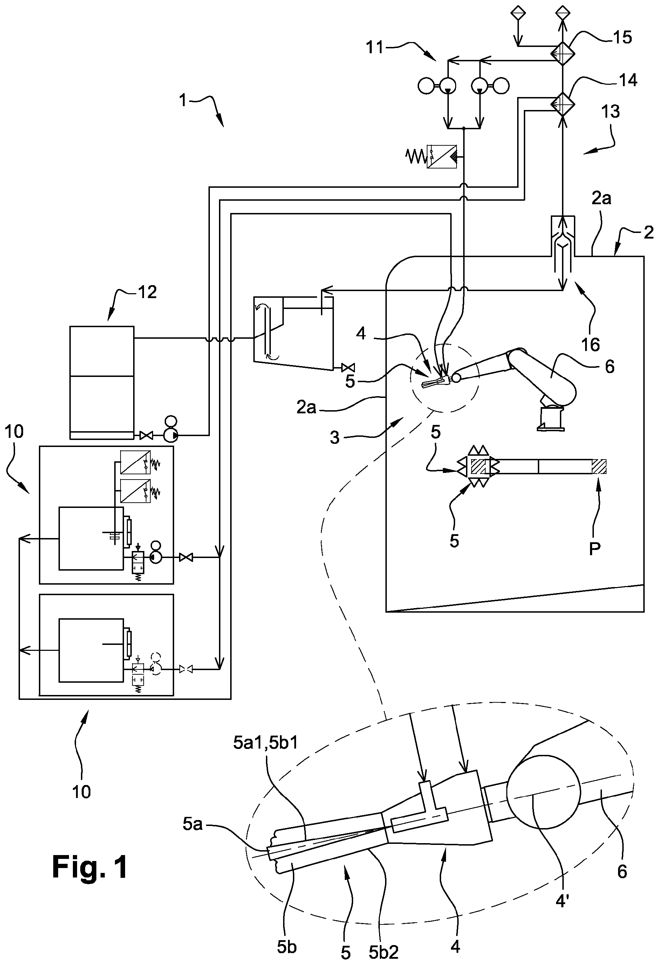

L'installation de nettoyage/dégraissage 1, représentée ici schématiquement sur la figure 1, est particulièrement adaptée pour le traitement de pièces manufacturées de grandes dimensions, telles que les pièces mécaniques pour éoliennes (notamment roulements, couronnes d'orientation et les pièces constitutives des boîtes de vitesse).

Par « pièce de grandes dimensions », on entend par exemple, sans aucunement se limiter, un carter de 5 m de long, 3 m de large et 2 m de hauteur, pouvant peser jusqu'à 7 tonnes ; on entend également une couronne d'orientation dont le diamètre est compris entre 2 et 4 m, pour un poids de 1,5 à 3 t.

Une telle pièce mécanique est illustrée de manière schématique sur la figure 1, désignée par un repère P.

L'installation 1 comprend une cabine 2 comportant un ensemble de parois 2a (notamment un plafond et une ceinture de parois latérales) qui définissent ensemble un espace de traitement 3.
La pièce à traiter P est introduite dans cet espace de traitement 3 pour assurer les opérations de nettoyage et/ou dégraissage, voire même de séchage, comme développé par la suite.
A titre indicatif, le volume de cet espace de traitement 3 est avantageusement compris entre 30 et 100 m³.

Pour assurer ces opérations de traitement, l'espace 3 est équipé de moyens 4 pour l'application d'un jet de traitement 5 sur la pièce P.

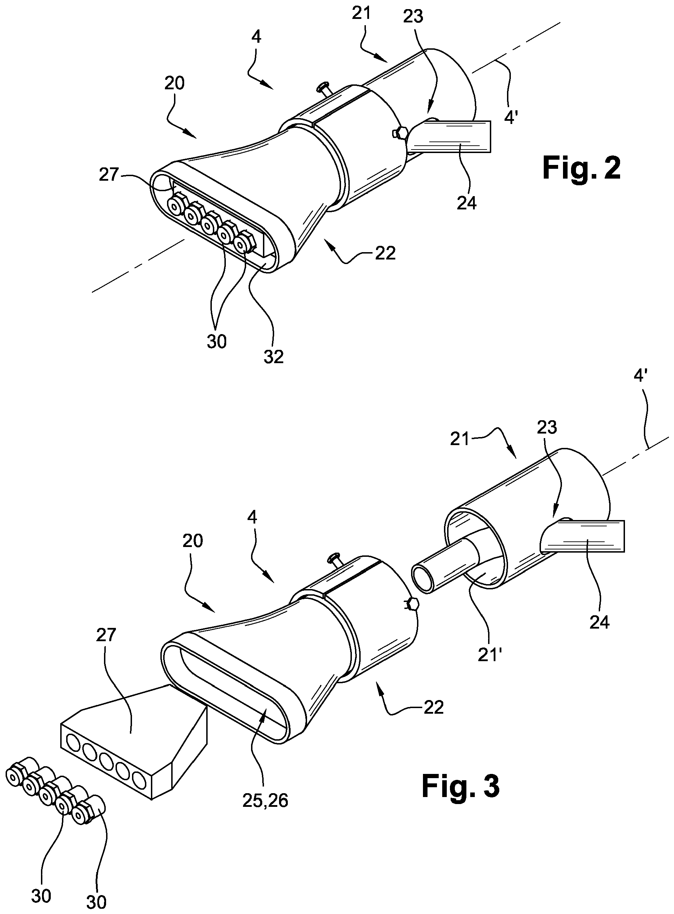

Les moyens d'application 4 consistent avantageusement en une tête d'application, comportant avantageusement une structure telle que décrite plus en détails par la suite en relation avec les figures 2 à 8 ou 9 à 12.

Cette tête d'application 4 est portée ici par un dispositif 6 permettant sa manoeuvre dans l'espace, de manière à nettoyer/dégraisser l'ensemble de la surface de la pièce P avec le jet de traitement 5.
Ce moyen de manoeuvre 6 consiste par exemple en un bras robotisé, ou en un système à un ou deux axes numérisés.

Le jet de traitement 5 selon l'invention, projeté par la tête d'application 4, offre un nettoyage et/ou un dégraissage de la pièce P, cela avec une efficacité et un rendement particulièrement intéressants.

A cet effet et tel que représenté schématiquement sur la vue de détail de la figure 1, le jet de traitement 5 est constitué par deux fluides juxtaposés et projetés dans un même sens, avantageusement coaxialement ou au moins approximativement coaxialement l'un par rapport à l'autre, à savoir :
(i) un jet central 5a constitué par de la vapeur d'eau sous pression, et
(ii) un jet périphérique 5b constitué par de l'air sous pression, entourant ledit jet central 5a.

Le jet de vapeur 5a est ici plein, et il présente une section délimitée par un contour extérieur 5a1.

Le jet d'air 5b est creux ; il présente une section délimitée par un contour intérieur 5b1 et un contour extérieur 5b2.
Le contour intérieur 5b1 du jet d'air 5b délimite ainsi un volume, au sein duquel est projeté le jet de vapeur 5a.

Pour une action optimale du jet de traitement 5, le jet périphérique d'air 5b est projeté sur tout le pourtour du jet central 5a.
Ce jet d'air 5b consiste avantageusement en une lame continue de fluide ; ses contours intérieur 5b1 et extérieur 5b2 sont ainsi continus.

Encore pour une action optimale, le contour intérieur 5b1 du jet d'air 5b épouse au mieux le contour extérieur 5a1 du jet de vapeur 5a.
De manière alternative, le contour extérieur 5a1 du jet de vapeur 5a et le contour intérieur 5b1 du jet d'air 5b peuvent être à distance l'un de l'autre.

Tel que décrit ci-après en relation avec les figures 2 à 8, le contour intérieur 5b1 du jet d'air 5b et le contour extérieur 5a1 du jet de vapeur 5a présentent chacun une forme générale allongée, par exemple rectangulaire ou oblongue.
Comme développé par la suite, le jet central 5a peut présenter une forme générale allongée, par exemple une forme générale rectangulaire ou oblongue. Le jet d'air 5b comporte alors également une section de forme générale allongée, par exemple de couronne aplatie.

De manière alternative, non représentée, le contour intérieur 5b1 du jet d'air 5b et le contour extérieur 5a1 du jet de vapeur 5a peuvent présenter une forme générale circulaire. Dans ce cas, la section du jet de vapeur 5a est de forme générale circulaire, entouré par un jet d'air 5b en forme générale de couronne circulaire.

Par « vapeur d'eau », on entend de l'eau à l'état gazeux. Cette notion couvre aussi bien (i) de la vapeur d'eau dite saturée ou humide, que (ii) de la vapeur d'eau dite sèche.

Par « vapeur d'eau saturée » ou « vapeur saturée » ou « vapeur humide », on entend une vapeur d'eau comportant ou transportant une certaine quantité de particules d'eau en suspension. On entend encore un mélange de gaz et de liquide.

Par « vapeur d'eau sèche », on entend une vapeur d'eau dépourvue, ou au moins quasiment dépourvue, d'eau sous forme liquide.

Les caractéristiques de la vapeur peuvent être définies par différentes grandeurs physiques, notamment pression, température, masse volumique et titre.

Le « titre » ou « titre en vapeur » permet d'exprimer le taux d'humidité de la vapeur (ou la proportion de vapeur (gaz) dans le mélange gaz/liquide), et de classer ce fluide entre vapeur saturée/vapeur sèche.
Ce titre est défini de la manière suivante : Masse vapeur sèche/(Masse vapeur sèche + Masse d'eau en phase liquide).
Ce titre peut encore être défini par la formule suivante : x = (v-u')/(u"-u'), dans laquelle u' est le volume massique du liquide, u" est le volume massique de la vapeur, v est le volume du mélange.
De préférence, la vapeur est dite « saturée » ou « humide » quand son titre est inférieur à 1.

Pour assurer un traitement optimal, au niveau des moyens d'application 4 ou en sortie de ces moyens 4, le jet de vapeur d'eau 5a comporte avantageusement les caractéristiques suivantes :
- un débit massique compris entre 60 kg et 200 kg/h,
- une pression comprise entre 4 et 15 bars,
- une température comprise entre 150 et 250°C, et de préférence 150 à 200°C,
- une vitesse comprise entre 30 et 80 m/s, et de préférence 30 et 60 m/s, et
- un titre inférieur à 1, de préférence entre 0,75 et 0,95, et de préférence supérieur à 0,9 et de préférence encore de l'ordre de 0,95.

D'autre part, on entend par « air », constitutif du jet périphérique 5b, par exemple un fluide dont la composition est identique, ou au moins similaire, à celui de l'air atmosphérique (c'est-à-dire avec une fraction molaire ou en volume de l'ordre de 80% de diazote, et 20% de dioxygène).

Les caractéristiques de l'air peuvent également être définies par différentes grandeurs physiques, notamment pression, température, masse volumique et taux d'humidité relative.

L'humidité relative de l'air (ou degré d'hygrométrie) correspond au rapport de la pression partielle de vapeur d'eau contenue dans l'air sur la pression de vapeur saturante (ou tension de vapeur) à la même température et pression.

De préférence, l'air du jet périphérique 5b est constitué par de l'air sec, obtenu avantageusement à partir d'air atmosphérique élevé en température pour réduire son humidité relative.

En l'occurrence, au niveau des moyens d'application 4 ou en sortie de ces moyens 4, le jet d'air 5b comporte avantageusement les caractéristiques suivantes :
- un débit volumique compris entre 0,2 et 0,8 m³/s,
- une température comprise entre 30 et 70°C,
- un taux d'humidité relative compris entre 5 et 30 %, et
- une vitesse comprise entre 50 et 100 m/s, mais pouvant atteindre 180 m/s.

A titre indicatif seulement, le rapport entre, d'une part, le débit massique de la vapeur d'eau exprimé en kg/h, et d'autre part, le débit volumique du jet d'air exprimé en m³/s, est avantageusement compris entre 280 et 460, et de préférence de l'ordre de 350 (soit par exemple un débit massique de la vapeur d'eau de l'ordre de 140 kg/h, et un débit volumique du jet d'air de l'ordre de 0,4 m³/s).

Toujours pour une efficacité optimale, la distance de travail entre la tête d'application 4 et la pièce à traiter P est avantageusement comprise entre 25 et 250 mm, et de préférence entre 25 et 100 mm.

Comme évoqué précédemment, une telle combinaison de jets sous pression permet un nettoyage et/ou un dégraissage des pièces à traiter P de manière particulièrement efficace et économique.
De plus, la pièce P ainsi traitée présente une quantité réduite d'eau à sa surface, en fin de traitement ; elle présente ainsi un aspect de surface de type pré-séché, facilitant son séchage final et réduisant l'énergie nécessaire à cet effet.
En outre, le jet central de vapeur d'eau est protégé par le jet périphérique d'air. Sans être lié par aucune théorie, le jet périphérique d'air évite la dilution de l'énergie dans l'atmosphère liée aux pertes de charges consécutives à la vitesse de pénétration d'un fluide dans l'atmosphère. Ce système a donc un double effet : (i) la protection de la vapeur d'eau et (ii) l'apport d'une énergie moteur ayant un effet mécanique d'impact fort.

Pour générer le jet de traitement 5, la tête d'application 4 est convenablement raccordée avec des moyens de production en fluides de traitement sous pression, à savoir :
(i) des moyens 10 pour la production de vapeur d'eau sous pression, cette dernière étant destinée à constituer le jet central 5a, et
(ii) des moyens 11 pour produire l'air sous pression, destiné à constituer le jet périphérique 5b.

Les moyens 10 pour produire la vapeur d'eau consistent par exemple en un ou des générateurs de vapeur du type bouilloire ou serpentin ; ils sont de préférence alimentés en eau par une cuve tampon 12 et/ou par une alimentation en eau déminéralisée ou en eau adoucie. Par exemple, ces générateurs de vapeur sont aptes à produire jusqu'à 140 ou 200 kg/heure de vapeur, (i) à une température de 170°C et avec une pression de 7 bars ou (ii) à une température de 200°C et avec une pression de 15 bars.

Les moyens 11 pour produire l'air sous pression consistent avantageusement en un ou des dispositifs du type turbine annulaire.
Ils comportent en particulier des moyens pour assurer le chauffage de l'air, de sorte à augmenter sa température, et réduire son taux d'humidité relative.

Par exemple, les moyens de production d'air 11 consistent en des turbines ayant une puissance de 11 kW, avec une vitesse de rotation de 3000 tours/minute et aptes à générer un débit de 800 m³/heure à une pression de 300 mbars.

En parallèle, l'atmosphère de l'espace de traitement 3 est contrôlée notamment (i) pour obtenir un système permanent (équilibre entre les débits massiques entrant et sortant), et (ii) pour prévenir, ou tout au moins limiter, les phénomènes de condensation de la vapeur d'eau, avec les problèmes qui en découleraient (notamment humidification de la cabine 2 et de la pièce manufacturée).

Pour cela, l'ambiance de l'espace de traitement 3 est maintenue avec les paramètres physiques suivants :
- une pression comprise entre 1013 et 1035 mbar,
- une température comprise entre 30 et 80°C, et de préférence entre 30 et 65°C,
- un taux d'humidité relative compris entre 30 et 80 %.
Par exemple, la température de l'espace de traitement 3 est de l'ordre de 55°C, avec un taux d'humidité relative de l'ordre de 70% et avec une température de rosée de l'ordre de 45°C.

Ces paramètres physiques de l'espace de traitement 3 sont maintenus notamment par :
- un pilotage adapté du jet d'air 5b, notamment en termes de débit, de température et de taux d'humidité, et
- des moyens 13 pour l'évacuation du mélange air/eau contenu dans l'espace intérieur 3.
Des moyens électroniques/informatiques équipent l'installation 1 pour assurer ce pilotage.

On notera qu'en plus de « protéger » le jet de vapeur 5a, le jet d'air 5b permet de maintenir la pression partielle de vapeur de l'espace de traitement 3, à une valeur inférieure à la pression de vapeur saturante. Cette caractéristique permet un maintien d'une ambiance sèche dans l'espace de traitement 3 (on évite donc la présence d'un brouillard lié à une quantité d'air trop faible).
De manière alternative ou complémentaire, l'espace de traitement 3 peut encore être équipé d'arrivée(s) d'air complémentaire(s) pour ajuster les paramètres de son ambiance.

Les moyens d'évacuation 13 peuvent consister en un conduit d'évacuation, avec perte de charge, ajusté pour maintenir en surpression l'espace intérieur.

Par ailleurs, pour optimiser le rendement de l'installation 1, les moyens évacuation 13 sont avantageusement couplés à des moyens 14, 15 et 16 pour la récupération de l'eau et l'énergie thermique contenues dans l'atmosphère sortant de l'espace de traitement 3.

A cet effet, le mélange eau/air prélevé dans l'espace de traitement 3 est mis en circulation au travers de deux dispositifs échangeurs thermiques, à savoir :
- un échangeur air/eau 14, pour assurer le chauffage, ou au moins le préchauffage, de l'eau provenant de la cuve tampon 12 et destinée à alimenter les générateurs de vapeur 10, de manière à faciliter sa vaporisation, et
- un échangeur air/air 15, pour assurer le chauffage, ou au moins le préchauffage, de l'air destiné à être propulsé par les turbines annulaires 11.

Des moyens collecteurs 16 sont en plus associés à ces moyens d'évacuation 13, pour la récupération de l'eau contenue dans l'atmosphère évacuée et provenant de la condensation de la vapeur lors de son refroidissement.
Ces moyens collecteurs 16 sont raccordés au circuit d'alimentation d'eau, ici à la cuve tampon 12, pour réduire la consommation en eau de l'installation 1.

En pratique, la pièce P est donc tout d'abord introduite dans la cabine 2, au sein de l'espace de traitement 3.

Une fois en place, le jet de traitement 5 est convenablement appliqué sur la pièce P, par l'intermédiaire de la tête 4 déplacée dans l'espace par le robot 6.

Lors de ce traitement, le jet de vapeur sous pression 5a sort de la tête d'application 4 dans l'espace annulaire délimité par le jet d'air 5b.

Le jet de vapeur 5a assure ainsi l'élimination des contaminants de surfaces (particules, huiles, etc.). Cette action de nettoyage/dégraissage est particulièrement efficace avec une vapeur d'eau saturée : les gouttelettes d'eau viennent capter et/ou diluer les contaminants, qui sont éliminés par écoulement de la pièce P.
Le jet d'air 5b protège le jet de vapeur 5a ; il assure également (i) l'apport d'une énergie moteur ayant un effet mécanique d'impact fort, (ii) une poussée mécanique sur l'eau de la pièce à traiter et (iii) l'évaporation, au moins partielle, de l'eau résiduelle en surface de la pièce P, ce qui limite l'énergie nécessaire au séchage final.

Les caractéristiques du jet de vapeur 5a et la manoeuvre dans l'espace du jet de traitement 5 sont contrôlées par des moyens électroniques/informatiques, sur la base d'un programme spécifique adapté à façon pour chaque forme de pièce P. Ce programme de traitement tient compte notamment de la forme de la pièce P, et du degré de nettoyage/dégraissage recherché.

En parallèle, le débit volumique du jet d'air 5b est piloté de sorte à protéger le jet de vapeur 5a, et aussi de sorte à ajuster la pression partielle de vapeur d'eau contenue dans l'espace de traitement 3.

La distance de travail est ajustée de sorte à réduire, voire supprimer, le mélange entre la vapeur et l'air. En pratique et sans être limité par aucune théorie, il semble que ce mélange ne se produise qu'après une certaine distance par rapport à la tête d'application 4, du fait de la vitesse des jets. On adapte ainsi cette distance de travail avant la distance de mélange.
La pièce manufacturée P est ainsi soumise au jet de vapeur 5a tel qu'il est projeté, ou au moins selon des caractéristiques très proches, sans se mélanger avec l'atmosphère de l'espace de traitement 3 ni perte de vitesse.

En fin de traitement, il est intéressant d'arrêter la projection du jet de vapeur 5a tout en poursuivant la projection du jet d'air 5b.
Ce jet de traitement d'air final va permettre de réduire la pression partielle en vapeur de l'espace de traitement 3, de manière à pré-sécher, voire même sécher, à la fois la pièce traitée P et l'espace de traitement 3.
De même, le faible taux d'humidité relative du jet d'air 5b améliore l'évaporation de l'eau présente sur la pièce P.
Cette évaporation est encore favorisée par l'énergie thermique accumulée par la pièce P lors de son traitement.

Des essais ont été mis en oeuvre avec le dispositif selon l'invention, pour le nettoyage de deux pièces cylindriques présentant les dimensions suivantes : 1008 mm x 174 mm et 590 mm x 415 mm.
Les traitements ont permis d'obtenir le dégraissage des deux pièces avec des résultats supérieurs à la norme 38 DIN (40 pour une pièce et 44 pour l'autre) en 12 min ; en fin de traitement, les pièces ont une température de l'ordre de 40°C.

Les figures 2 à 8 représentent une forme de réalisation possible de la tête d'application 4 destinée à équiper l'installation 1 décrite en relation avec la figure 1.
Les termes « amont » et « aval » utilisés sont associés au sens de cheminement des deux fluides de traitement au travers de cette tête d'application 4.

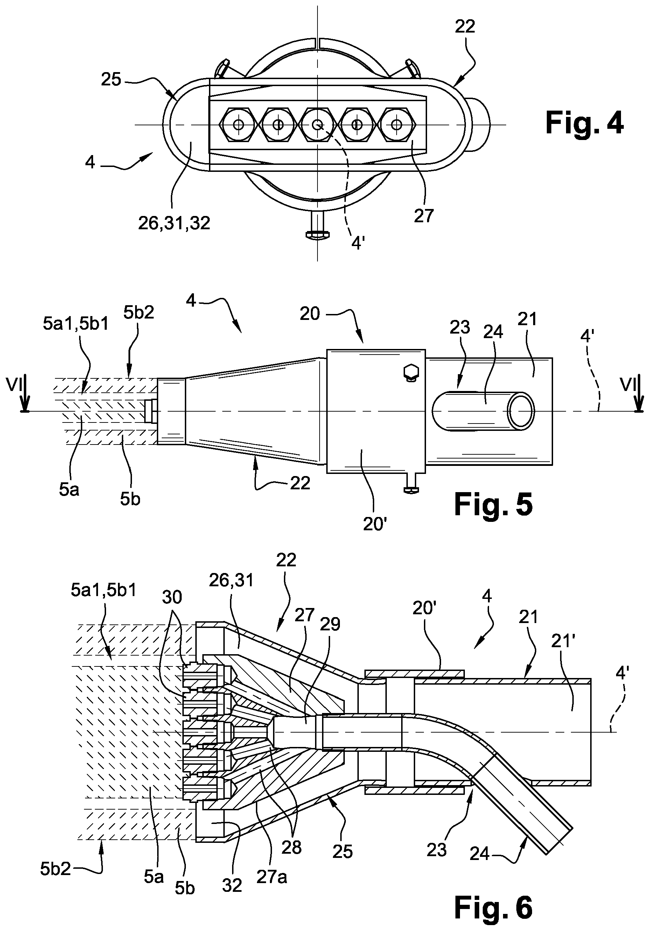

Tel que représenté sur les figures 2 et 3, la tête d'application 4, d'axe longitudinal 4', comporte un corps 20 composé d'une embase amont 21 et d'une jupe aval 22.
Ces parties amont 21 et aval 22 sont constituées chacune par une pièce, assemblées ensemble hermétiquement, selon l'axe de symétrie 4', par des moyens mécaniques, par exemple en forme de collier 20' (Figures 3 et 6). De manière alternative, ces deux parties 21 et 22 peuvent être monobloc.

L'embase 21 consiste en une pièce tubulaire cylindrique qui délimite un orifice amont/aval 21' (figure 3), destiné à être raccordé aux moyens de production d'air sous pression 11, au niveau de son extrémité amont.
Elle comporte encore une lumière 23 qui est traversée par un conduit 24 raccordé, du côté amont, aux moyens de production de vapeur 10.

La jupe 22 est également de forme générale tubulaire, évoluant progressivement d'une section circulaire amont vers une section oblongue aval selon l'axe de symétrie 4' (visible figures 4 et 5).

Cette jupe 22 comporte une surface intérieure 25, visible notamment sur les figures 4 et 6, définissant un volume intérieur 26 dans lequel est logée une pièce 27 formant distributeur pour la vapeur d'eau.

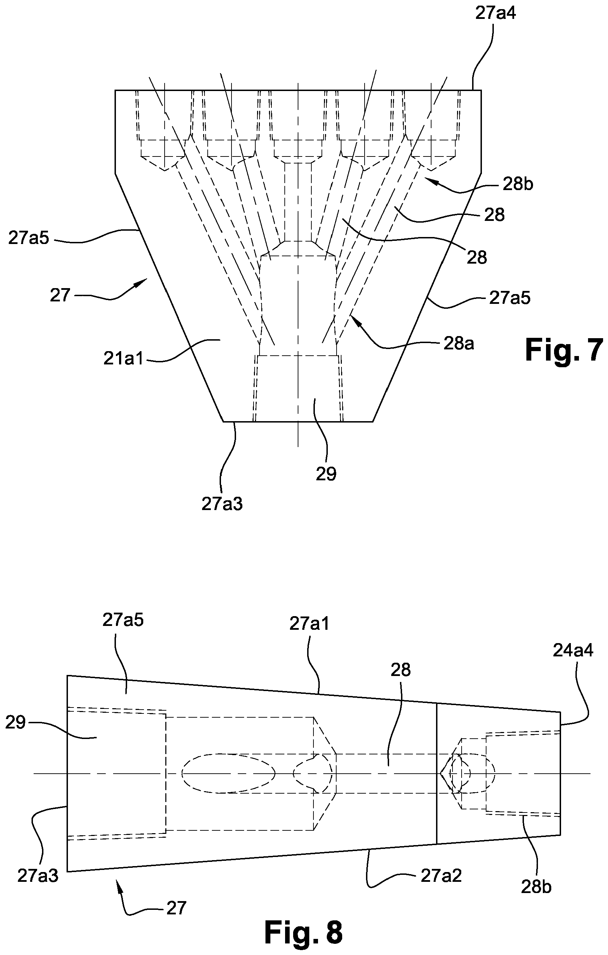

Le distributeur 27, décrit plus en détails en relation avec les figures 7 et 8, consiste en un corps présentant une surface extérieure 27a composée d'une face de dessus 27a1 et d'une face de dessous 27a2, d'une face amont 27a3, d'une face aval 27a4 et de deux faces de côtés 27a5.

Comme on peut l'observer sur la figure 7, la face amont 27a3 est moins large que la face aval 27a4, et les faces de côtés 27a5 divergent l'une par rapport à l'autre dans le sens face amont 27a3 vers face aval 27a4.
On peut observer encore sur la figure 8 que la face amont 27a3 présente une hauteur supérieure à la face aval 27a4.

Le distributeur 27 intègre encore une pluralité de conduits de distribution 28, ici au nombre de cinq, pour le cheminement de la vapeur dans le sens amont/aval.

Ces conduits de distribution 28 comportent chacun deux extrémités, l'une amont 28a et l'autre aval 28b, situées respectivement du côté des faces amont 27a3 et aval 27a4 du distributeur 27.

Les extrémités amont 28a des différents conduits de distribution 28 se rejoignent au niveau d'une chambre 29 formant collecteur raccordée à l'extrémité aval du conduit d'alimentation 24 précité (voir figure 6).
L'extrémité aval 28b de ces mêmes conduits de distribution 28 forme un logement dans lequel est rapportée une buse de sortie 30 (visible en particulier sur les figures 3 et 6).

Sur les figures 2 à 9, on peut observer que les différentes buses 30 sont réparties sur une même ligne.
Cet agencement particulier permet d'obtenir un jet de vapeur central 5a de forme générale rectangulaire ou oblongue.

Sur la figure 6, on remarque que la surface extérieure 27a du distributeur 27 et la surface intérieure 25 de la jupe 22 définissent ensemble un conduit périphérique 31 destiné à être traversé par l'air sous pression provenant de l'embase 21, dans le sens amont vers aval.

Ce conduit périphérique 31 se termine en aval par un orifice de sortie 32 (ou buse de sortie) en forme de couronne, permettant la production de la lame d'air sous pression entourant le jet de vapeur 5a.

Une telle structure permet la production du jet de traitement 5 selon l'invention, décrit précédemment en relation avec la figure 1 et tel que représenté schématiquement sur les figures 5 et 6.

Cette tête d'application 4 est en particulier adaptée pour le traitement de surface large.

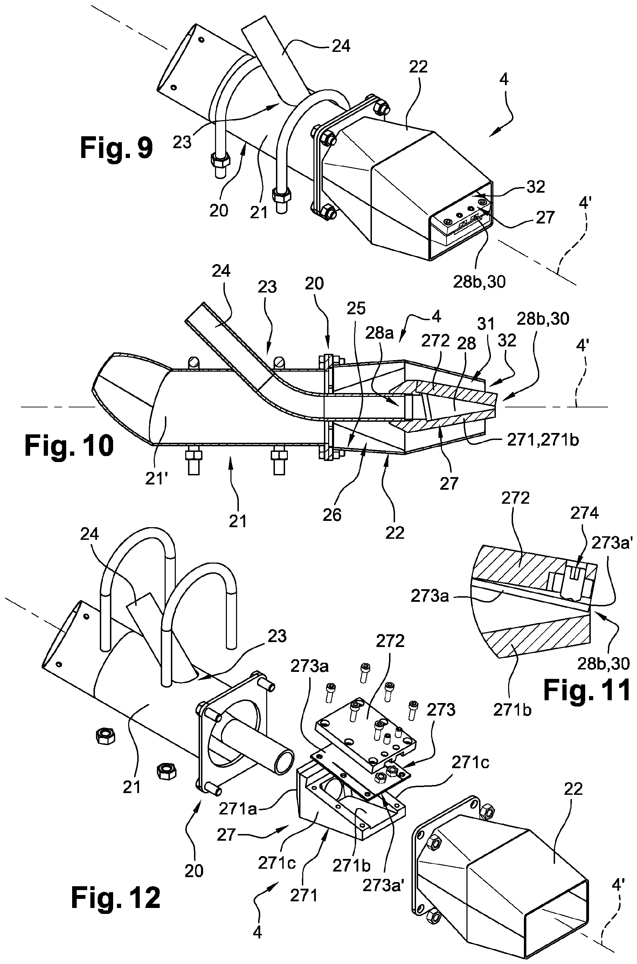

Les figures 9 à 12 représentent une seconde forme de réalisation possible de la tête d'application 4 destinée à équiper l'installation 1 décrite en relation avec la figure 1.

Pour simplifier la description de cette seconde forme de réalisation, les repères employés ci-dessus sont conservés pour désigner les pièces dont les fonctions sont identiques.

Cette seconde forme de réalisation se distingue de celle décrite précédemment en particulier par la structure de son distributeur de vapeur d'eau.

Tel que représenté sur ces figures 9 à 12, la tête d'application 4, d'axe longitudinal 4', comporte un corps 20 composé d'une embase amont 21 et d'une jupe aval 22.
Ces parties amont 21 et aval 22 sont constituées chacune par une pièce, assemblées ensemble hermétiquement, selon l'axe de symétrie 4', par des moyens mécaniques, par exemple boulonnage. De manière alternative, ces deux parties 21 et 22 peuvent être monobloc.

L'embase 21 consiste en une pièce tubulaire cylindrique qui délimite un orifice amont/aval 21' (figure 10), destiné à être raccordé aux moyens de production d'air sous pression 11, au niveau de son extrémité amont.
Elle comporte encore une lumière 23 qui est traversée par un conduit 24 raccordé, du côté amont, aux moyens de production de vapeur 10.

La jupe 22 est de forme générale tubulaire polyédrique, évoluant progressivement, dans le sens amont vers aval, d'une section octogonale amont vers une section rectangulaire aval selon l'axe de symétrie 4'.

Cette jupe 22 comporte une surface intérieure 25, visible sur la figure 10, définissant un volume intérieur 26 dans lequel est logée une pièce 27 formant distributeur pour la vapeur d'eau.

Le distributeur 27, que l'on peut observer en particulier sur les figures 10, 11 et 12, consiste en un corps constitué par deux pièces assemblées : une pièce support 271, formant berceau, et une pièce complémentaire 272.

La pièce support 271 comporte un ensemble de parois planes : - une paroi arrière 271a, fixée hermétiquement sur l'extrémité aval du conduit 24 amenant la vapeur d'eau, - une paroi inférieure 271b, et - deux parois latérales 271c, prolongeant à l'équerre ladite paroi inférieure 271b.

La pièce complémentaire 272 consiste en une platine, fixée hermétiquement, par exemple au moyen de vis, sur la bordure supérieure libre des parois latérales 271c de la pièce support 271.

La paroi inférieure 271b de la pièce support 271 et la pièce complémentaire 272, constituant la paroi supérieure du distributeur 27, sont ici convergentes l'une vers l'autre dans le sens amont vers aval.

Le distributeur 27 délimite un conduit de distribution 28 unique, pour le cheminement de la vapeur dans le sens amont/aval.

Ce conduit de distribution 28 comporte deux extrémités, l'une amont 28a et l'autre aval 28b. L'extrémité aval 28b forme une buse de sortie 30.

Ce conduit de distribution 28 est ici de section rectangulaire, avec une hauteur décroissante dans le sens amont vers aval. Il est délimité par les parois inférieure 271b et latérales 271c de la pièce support 271 et par la pièce complémentaire 272.
La buse de sortie 30 est également de section rectangulaire allongée.

Ce distributeur 27 comporte ici un moyen complémentaire pour régler la section, et en particulier la hauteur, de la buse de sortie rectangulaire 30.

Pour cela, une plaquette métallique particulière 273 est ici logée entre la pièce support 271 et la pièce complémentaire 272 ; elle est plaquée contre la face inférieure de la pièce complémentaire 272.

La portion centrale 273a de cette plaquette 273, s'étendant entre les parois latérales 271c de la pièce support 271, comporte une bordure d'extrémité libre 273a' venant définir la bordure supérieure de la buse de sortie 30.
Cette portion centrale 273a est manoeuvrable et déformable en pivotement, de manière élastique, de sorte à être écartée de la face inférieure de la pièce complémentaire 272.
Cette déformation permet le réglage de la distance séparant sa bordure d'extrémité libre 273a' par rapport à la bordure d'extrémité libre en regard de la paroi inférieure 271b de la pièce support 271.

Pour assurer le réglage de cette portion centrale 273a, des vis 274 sont rapportées sur la pièce complémentaire 272 ; ces vis 274 sont réglables en saillie au niveau de la face inférieure de la pièce complémentaire 272 et en direction de la paroi inférieure 271b de la pièce support 271.

Sur la figure 10, on remarque que la surface extérieure du distributeur 27 et la surface intérieure 25 de la jupe 22 définissent ensemble le conduit périphérique 31 destiné à être traversé par l'air sous pression provenant de l'embase 21, dans le sens amont vers aval.

Ce conduit périphérique 31 se termine en aval par un orifice (ou buse) de sortie 32 en forme de couronne (ici rectangulaire), permettant la production de la lame d'air sous pression entourant le jet de vapeur 5a.

Une telle structure permet également la production du jet de traitement 5 selon l'invention, décrit précédemment en relation avec la figure 1.

## Revendications

1. Tête d'application pour la projection d'un jet de traitement (5), destinée à équiper une installation (1) pour le nettoyage et/ou le dégraissage de pièces manufacturées (P) laquelle tête d'application (4) comprend, d'une part, au moins une première buse de sortie (30) destinée à être raccordée à des moyens (10) de production de vapeur, pour l'application d'un jet central (5a) constitué par ladite vapeur d'eau sous pression et, d'autre part, au moins une seconde buse de sortie (32) entourant ladite ou lesdites premières buses (30), destinée à être raccordée à des moyens (11) de production d'air sous pression, pour l'application d'un jet périphérique (5b) constitué par ledit air sous pression,
laquelle tête d'application comportant un corps (20) composé d'une embase amont (21) et d'une jupe aval (22), lequel corps (20) est muni d'un logement traversant amont/aval (21', 26) pour la circulation de l'air sous pression, laquelle jupe (22) comporte une surface intérieure (25) définissant un volume intérieur (26) dans lequel est logé un élément formant distributeur (27), lequel distributeur (27) intègre un ou des conduits de distribution (28) comportant chacun deux extrémités: une extrémité amont (28a) destinée à être raccordée à des moyens de production de vapeur (10) et une extrémité aval (28b) terminée par la ou les premières buse(s) de sortie (30), et ladite tête d'application (4) comportant un conduit périphérique (31) pour le cheminement de l'air sous pression délimité par la surface extérieure (27a) dudit distributeur (27) et la surface intérieure (25) de ladite jupe (22), **caractérisée en ce que** ledit conduit périphérique (31) se termine en aval par un orifice de sortie in forme de couronne de sortie (32) pour l'air sous pression de manière à projeter, sur lesdites pièces manufacturées (P), un jet de traitement (5) constitué, d'une part, dudit jet central (5a) constitué par ladite vapeur d'eau sous pression, et d'autre part, dudit jet périphérique (5b) constitué par ledit air sous pression, entourant ledit jet central (5a).

2. Tête d'application selon la revendication 1, **caractérisée en ce que** les extrémités amont (28a) des conduits de distribution (28) se rejoignent au niveau d'une chambre (29) formant collecteur raccordée aux moyens de production de vapeur (10).

3. Tête d'application selon l'une quelconque des revendications 1 ou 2, **caractérisée en ce que** le distributeur (27) délimite un conduit de distribution (28) unique dont l'extrémité aval (28b) forme une buse de sortie (30), lequel distributeur (27) comporte un moyen complémentaire pour régler la section de ladite buse de sortie (30).

4. Installation pour le nettoyage et/ou le dégraissage de pièces manufacturées (P), laquelle installation (1) comprend:
- des moyens (10, 11) pour la production de fluides de traitement sous pression, qui comprennent (i) des moyens (10) pour produire un premier fluide de traitement constitué par de la vapeur d'eau sous pression, et (ii) des moyens (11) pour produire un second fluide de traitement constitué par de l'air sous pression, et
- un espace de traitement (3) équipé de moyens d'application (4) raccordés auxdits moyens (10, 11) de production de fluides de traitement sous pression, pour l'application de fluides de traitement sous pression sous la forme d'un jet (5) sur lesdites pièces manufacturées (P), de manière à assurer leur nettoyage et/ou leur dégraissage,
lesdits moyens d'application (4) comprenant une tête d'application selon l'une quelconque des revendications 1 à 3, dont la première buse de sortie (30) est raccordée auxdits moyens (10) de production de vapeur, pour l'application d'un jet central (5a) constitué par ladite vapeur d'eau sous pression et, dont la seconde buse de sortie (32) entourant ladite ou lesdites premières buses (30) est raccordée auxdits moyens (11) de production d'air sous pression, pour l'application d'un jet périphérique (5b) constitué par ledit air sous pression, de manière à projeter, sur lesdites pièces manufacturées (P), un jet de traitement (5) constitué, d'une part, dudit jet central (5a) constitué par ladite vapeur d'eau sous pression, et d'autre part, dudit jet périphérique (5b) constitué par ledit air sous pression, entourant ledit jet central (5a).

5. Installation selon la revendication 4, **caractérisée en ce que** les moyens de production des fluides (10, 11) coopèrent avec des moyens (13, 14, 15, 16) pour la récupération d'eau et/ou d'énergie thermique contenues dans l'espace de traitement (3).

6. Procédé pour le nettoyage et/ou le dégraissage de pièces manufacturées (P) au sein d'une installation (1) selon l'une quelconque des revendications 4 ou 5,
qui
comprend une opération de traitement au cours de laquelle lesdites moyens d'application (4) projettent, sur lesdites pièces manufacturées (P), un jet de traitement (5) constitué, d'une part, d'un jet central (5a) constitué par ladite vapeur d'eau sous pression, et d'autre part, d'un jet périphérique (5b) constitué par ledit air sous pression, entourant ledit jet central (5a).

7. Procédé selon la revendication 6, **caractérisé en ce que** le jet d'air (5b) consiste en une lame continue de fluide entourant le jet de vapeur d'eau (5a).

8. Procédé selon l'une quelconque des revendications 6 ou 7, **caractérisé en ce que** le contour intérieur (5b1) du jet d'air (5b) et le contour extérieur (5a1) du jet de vapeur (5a) présentent chacun une forme choisie parmi (i) une forme générale allongée, par exemple rectangulaire ou oblongue, ou (ii) une forme générale circulaire.

9. Procédé selon l'une quelconque des revendications 6 à 8, **caractérisé en ce que** le jet de vapeur (5a) est constitué d'une vapeur saturée, et **en ce que** le jet d'air (5b) est constitué d'air sec.

10. Procédé selon l'une quelconque des revendications 6 à 9, **caractérisé en ce que** le jet de vapeur (5a) comporte, au niveau des moyens d'application (4), les caractéristiques suivantes :
- un débit massique compris entre 60 kg et 200 kg/h,
- une pression comprise entre 4 et 15 bars,
- une température comprise entre 150 et 250 °C,
- une vitesse comprise entre 30 et 80 m/s, et
- un titre inférieur à 1,
et **en ce que** le jet d'air (5b) comporte, au niveau des moyens d'application (4), les caractéristiques suivantes:
- un débit volumique compris entre 0,2 et 0,8 m³/s,
- une température comprise entre 30 et 70 °C,
- un taux d'humidité relative compris entre 5 et 30 %, et
- une vitesse comprise entre 50 et 180 m/s.

11. Procédé selon l'une quelconque des revendications 6 à 10, **caractérisé en ce qu'**il comprend au moins une étape au cours de laquelle le débit volumique en vapeur d'eau et le débit volumique en air constitutifs du jet de traitement (5) sont pilotés de sorte à ajuster la pression partielle de vapeur d'eau de l'espace de traitement (3) de ladite installation (1).

12. Procédé selon la revendication 11, **caractérisé en ce qu'**il comprend une étape finale d'arrêt de l'application du jet de vapeur (5a) tout en poursuivant l'application du jet d'air (5b), de manière à assécher la pièce traitée (P) et l'espace de traitement (3) de l'installation (1).

## Patentansprüche

1. Applikationskopf für das Bereitstellen eines Behandlungsstrahls (5), wobei der Applikationskopf für das Ausrüsten einer Anlage zur Reinigung und/oder Entfettung von Produktionsteilen (P) bestimmt ist, wobei der Applikationskopf (4) einerseits mindestens eine erste Austrittsdüse (30) für das Erzeugen eines zentralen Düsenstrahls (5a) aufweist, die dazu bestimmt ist, an Dampfproduktionsmittel (10) angeschlossen zu werden, wobei der zentrale Düsenstrahl (5a) aus mit Druck beaufschlagtem Wasserdampf besteht, und wobei der Applikationskopf (4) andererseits mindestens eine zweite Austrittsdüse (32) aufweist, welche die erste Austrittsdüse (30) oder die ersten Austrittsdüsen (30) umgibt, die dazu bestimmt ist, an Mittel (11) für das Erzeugen von Druckluft angeschlossen zu werden, um einen peripheren Düsenstrahl (5b) bereitzustellen, der aus Druckluft besteht,
wobei der Applikationskopf einen Körper (20) hat, der aus einem stromaufwärtsseitig angeordneten Sockel (21) und einer stromabwärtsseitig angeordneten Schürze (22) besteht, und wobei der Körper (20) eine von der stromaufwärtsseitig angeordneten Seite des Körpers zu der stromabwärtsseitig angeordneten Seite des Körpers durchgehende Aufnahme (21', 26) für das Hindurchtreten von Druckluft hat, wobei die Schürze (22) eine innere Oberfläche (25) aufweist, die ein Innenvolumen (26) definiert, in welchem ein Verteilerelement (27) untergebracht ist, wobei das Verteilerelement (27) eine oder mehrere Verteilungsleitungen (28) enthält, die jeweils zwei Enden aufweisen: ein stromaufwärtsseitig angeordnetes Ende (28a), das dazu bestimmt ist, an Dampfproduktionsmittel (10) angeschlossen zu werden, und ein stromabwärtsseitig angeordnetes Ende (28b), das durch die Austrittsdüse (30) oder die Austrittsdüsen (30) abgeschlossen ist, wobei der Applikationskopf (4) einen periphere Strömungsweg (31) für Druckluft aufweist, der von der äußeren Oberfläche (27a) des Verteilers (27) und der inneren Oberfläche (25) der Schürze (22) begrenzt ist,
**dadurch gekennzeichnet, dass** die periphere Leitung (31) eine stromabwärtsseitig angeordnete ringspaltförmige Öffnung für das Austreten der Druckluft hat, so dass auf die Produktionsteile (P) ein Behandlungsstrahl (5) gerichtet wird, der zum einen von dem zentralen Düsenstrahl (5a) gebildet wird, der aus dem mit Druck beaufschlagten Wasserdampf besteht, und zum anderen von dem peripheren Düsenstrahl (5b) aus der Druckluft gebildet wird, die den zentralen Düsenstrahl (5a) umgibt.

2. Applikationskopf nach Anspruch 1, **dadurch gekennzeichnet, dass** sich die stromaufwärtsseitig angeordneten Enden (28a) der Verteilungsleitungen (28) in einer Kammer (29) vereinen, die einen Sammler bildet, der an die Dampfproduktionsmittel (10) angeschlossen ist.

3. Applikationskopf nach einem der Ansprüche 1 oder 2, **dadurch gekennzeichnet, dass** das Verteilerelement (27) eine einzelne Verteilungsleitung (28) begrenzt, deren stromabwärtsseitig angeordnetes Ende (28b) eine Austrittsdüse (30) bildet, wobei das Verteilerelement (27) ein Zusatzmittel zum Einstellen des Querschnitts der Austrittsdüse (30) aufweist.

4. Anlage zur Reinigung und/oder Entfettung von Produktionsteilen (P), wobei die Anlage (1) Folgendes aufweist:
- Mittel (10, 11) für das Bereitstellen von mit Druck beaufschlagten Behandlungsfluiden, die (i) Mittel (10) zum Bereitstellen eines ersten Behandlungsfluids aufweisen, das von dem mit Druck beaufschlagten Wasserdampf gebildet wird, und (ii) Mittel (11) zum Bereitstellen eines zweiten Behandlungsfluids, das von der Druckluft gebildet wird, und
- einen Behandlungsraum (3), der mit Applikationsmitteln (4) ausgerüstet ist, die an die Mittel (10, 11) zum Bereitstellen von mit Druck beaufschlagten Behandlungsfluiden angeschlossen sind, zum Applizieren von mit Druck beaufschlagten Behandlungsfluiden in der Form eines Düsenstrahls (5) auf die Produktionsteile (P), um ihre Reinigung und/oder ihre Entfettung zu bewirken,
**dadurch gekennzeichnet, dass**
die Applikationsmittel (4) einen Applikationskopf nach einem der Ansprüche 1 bis 3 aufweisen, dessen erste Austrittsdüse (30) an die Dampfproduktionsmittel (10) angeschlossen ist, um einen zentralen Düsenstrahl (5a) bereitzustellen, der von dem mit Druck beaufschlagten Wasserdampf gebildet wird, und dessen zweite Austrittsdüse (32), die die erste Austrittsdüse oder die ersten Austrittsdüsen (30) umgibt, an die Mittel für das Erzeugen von Druckluft (11) angeschlossen ist, um einen peripheren Düsenstrahl (5b) bereitzustellen, der von der Druckluft gebildet wird, so dass auf die Produktionsteile (P) ein Behandlungsstrahl (5) appliziert wird, der einerseits aus dem zentralen Düsenstrahl (5a) besteht, der durch den mit Druck beaufschlagter Wasserdampf gebildet wird, und andererseits aus dem peripheren Düsenstrahl (5b) aus der Druckluft, die den zentralen Düsenstrahl (5a) umgibt.

5. Anlage nach Anspruch 4, **dadurch gekennzeichnet, dass** die Produktionsmittel der Fluide (10, 11) mit Mitteln (13, 14, 15, 16) zum Rückgewinnen von Wasser und/oder Wärmeenergie zusammenwirken, die in dem Behandlungsraum (3) enthalten sind.

6. Verfahren zur Reinigung und/oder Entfettung von Produktionsteilen (P) innerhalb einer Anlage (1) nach einem der Ansprüche 4 oder 5, mit einem Behandlungsvorgang, in dessen Verlauf die Applikationsmittel (4) auf die Produktionsteile (P) einen Behandlungsstrahl (5) spritzen, der einerseits aus einem zentralen Düsenstrahl (5a) aus mit Druck beaufschlagtem Wasserdampf und andererseits aus einem peripheren Düsenstrahl (5b) aus Druckluft gebildet wird, der den zentralen Düsenstrahl (5a) umgibt.

7. Verfahren nach Anspruch 6, **dadurch gekennzeichnet, dass** der Luftstrahl (5b) einen den Wasserdampfstrahl (5a) umgebenden Vorhang bildet.

8. Verfahren nach einem der Ansprüche 6 oder 7, **dadurch gekennzeichnet, dass** die Innenkontur (5b1) des Luftstrahls (5b) und die Außenkontur (5a1) des Dampfstrahls (5a) jeweils eine Form aus der folgenden Gruppe haben: (i) eine allgemeine gestreckte Form, zum Beispiel rechteckig oder länglich, oder (ii) eine allgemein kreisförmige Form.

9. Verfahren nach einem der Ansprüche 6 bis 8, **dadurch gekennzeichnet, dass** der Dampfstrahl (5a) aus einem gesättigten Dampf besteht, und dass der Druckluftstrahl (5b) aus trockener Luft besteht.

10. Verfahren nach einem der Ansprüche 6 bis 9, **dadurch gekennzeichnet, dass** der Dampfstrahl (5a) an den Applikationsmitteln (4) die folgenden Merkmale aufweist:
- einen Massenstrom zwischen 60 kg und 200 kg/h,
- einen Druck zwischen 4 und 15 bar,
- eine Temperatur zwischen 150 und 250 °C,
- eine Geschwindigkeit zwischen 30 und 80 m/s und
- einen Nassdampfgehalt (Titer) kleiner als 1,
und dass der Druckluftstrahl (5b) auf dem Niveau der Applikationsmittel (4) die folgenden Merkmale aufweist:
- einen Massendurchfluss zwischen 0,2 und 0,8 m³/s,
- eine Temperatur zwischen 30 und 70 °C,
- eine relative Luftfeuchtigkeit zwischen 5 und 30 % und
- eine Geschwindigkeit zwischen 50 und 180 m/s.

11. Verfahren nach einem der Ansprüche 6 bis 10, **dadurch gekennzeichnet, dass** es mindestens einen Schritt aufweist, in dessen Verlauf der Massendurchfluss von Wasserdampf und der Massendurchfluss von Luft, die den Behandlungsstrahl (5) bilden, derart gesteuert werden, dass der Wasserdampf-Partialdruck des Behandlungsraums (3) der Anlage (1) eingestellt wird.

12. Verfahren nach Anspruch 11, **dadurch gekennzeichnet, dass** es einen abschließenden Schritt umfasst, in dem das Applizieren des Dampfstrahls (5a) unterbunden ist, wobei gleichzeitig das Applizieren des Luftstrahls (5b) derart fortgesetzt wird, dass das behandelte Teil (P) und der Behandlungsraum (3) der Anlage (1) getrocknet werden.

## Claims

1. Application head for spraying a treatment jet (5), intended to equip an installation (1) for cleaning and/or degreasing manufactured parts (P), which application head (4) comprises, on the one hand, at least one first outlet nozzle (30) intended to be connected to the means (10) for producing steam, for the application of a central jet (5a) consisting of said pressurized steam and, on the other hand, at least one second outlet nozzle (32) surrounding said first nozzle or nozzles (30), intended to be connected to the means (11) for producing pressurized air, for the application of a peripheral jet (5b) consisting of said pressurized air, which application head comprises a body (20) composed of an upstream socket (21) and a downstream skirt (22), which body (20) is equipped with an upstream/downstream through-housing (21', 26) for the circulation of the pressurized air, which skirt (22) comprises an inner surface (25) that defines an internal volume (26) housed in which is an element that forms a distributor (27), which distributor (27) incorporates one or more distributing ducts (28) each comprising two ends: an upstream end (28a) connected to the steam-production means (10) and a downstream end (28b) terminated by the first outlet nozzle (s) (30), and in that said application head (4) comprises a peripheral duct (31) for the movement of the pressurized air that is delimited by the outer surface (27a) of said distributor (27) and the inner surface (25) of said skirt (22), **characterized in that** said peripheral duct (31) is terminated downstream by an outlet orifice in the form of an outlet ring (32) for the pressurized air, so as to spray, onto said manufactured parts (P), a treatment jet (5) consisting, on the one hand, of said central jet (5a) consisting of said pressurized steam and, on the other hand, of said peripheral jet (5b) consisting of said pressurized air, surrounding said central jet (5a).

2. Application head according to Claim 1, **characterized in that** the upstream ends (28a) of the distributing ducts (28) meet at a chamber (29) that forms a collector connected to the steam-production means (10).

3. Application head according to either one of Claims 1 and 2, **characterized in that** the distributor (27) delimits a single distributing duct (28), the downstream end (28b) of which forms an outlet nozzle (30), which distributor (27) comprises an additional means for adjusting the cross section of said outlet nozzle (30).

4. Installation for cleaning and/or degreasing manufactured parts (P), which installation (1) comprises:
- means (10, 11) for producing pressurized treatment fluids, which comprise (i) means (10) for producing a first treatment fluid consisting of pressurized steam, and (ii) means (11) for producing a second treatment fluid consisting of pressurized air, and
- a treatment space (3) equipped with application means (4) connected to said means (10, 11) for producing pressurized treatment fluids, for the application of pressurized treatment fluids in the form of a jet (5) to said manufactured parts (P), so as to ensure the cleaning thereof and/or the degreasing thereof,
said application means (4) comprising an application head according to any one of Claims 1 to 3, the first outlet nozzle (30) of which is connected to said means (10) for producing steam, for the application of a central jet (5a) consisting of said pressurized steam and the second outlet nozzle (32) of which surrounding said first nozzle or nozzles (30) is connected to said means (11) for producing pressurized air, for the application of a peripheral jet (5b) consisting of said pressurized air, so as to spray, onto said manufactured parts (P), a treatment jet (5) consisting, on the one hand, of said central jet (5a) consisting of said pressurized steam and, on the other hand, of said peripheral jet (5b) consisting of said pressurized air, surrounding said central jet (5a).

5. Installation according to Claim 4, **characterized in that** the fluid-production means (10, 11) co-operate with means (13, 14, 15, 16) for the recovery of water and/or of thermal energy contained in the treatment space (3).

6. Process for cleaning and/or degreasing manufactured parts (P) within an installation (1) according to either one of Claims 4 and 5, which comprises a treatment operation during which said application means (4) spray, onto said manufactured parts (P), a treatment jet (5) consisting, on the one hand, of a central jet (5a) consisting of said pressurized steam and, on the other hand, of a peripheral jet (5b) consisting of said pressurized air, surrounding said central jet (5a).

7. Process according to Claim 6, **characterized in that** the air jet (5b) consists of a continuous fluid space surrounding the steam jet (5a).

8. Process according to either one of Claims 6 and 7, **characterized in that** the internal contour (5b1) of the air jet (5b) and the external contour (5a1) of the steam jet (5a) each have a shape chosen from (i) a general elongated shape, for example a rectangular or oblong shape, or (ii) a general circular shape.

9. Process according to any one of Claims 6 to 8, **characterized in that** the steam jet (5a) consists of saturated steam, and **in that** the air jet (5b) consists of dry air.

10. Process according to any one of Claims 6 to 9, **characterized in that** the steam jet (5a) comprises, at the application means (4) the following features:
- a mass flow rate between 60 and 200 kg/h,
- a pressure between 4 and 15 bar,
- a temperature between 150°C and 250°C,
- a velocity between 30 and 80 m/s, and
- a vapour quality of less than 1,
and **in that** the air jet (5b) comprises, at the application means (4), the following features:
- a volume flow rate between 0.2 and 0.8 m³/s,
- a temperature between 30°C and 70°C,
- a degree of relative humidity between 5% and 30%, and
- a velocity between 50 and 180 m/s.

11. Process according to any one of Claims 6 to 10, **characterized in that** it comprises at least one step during which the volume flow rate of steam and the volume flow rate of air that make up the treatment jet (5) are controlled so as to adjust the partial pressure of steam of the treatment space (3) of said installation (1).

12. Process according to Claim 11, **characterized in that** it comprises a final step of shutdown of the application of the steam jet (5a) while continuing the application of the air jet (5b), so as to dry the treated part (P) and the treatment space (3) of the installation (1).
